# FASCICULE DE BREVET EUROPEEN

(11) **EP 1 184 247 B1**
(45) Date de publication et mention de la délivrance du brevet: **13.03.2013**
(21) Numéro de dépôt: 01401860.0
(22) Date de dépôt: 11.07.2001
(51) Int. Cl.: B60T 11/26, B60T 17/22

(54) **Dispositif d'alimentation en fluide hydraulique pour véhicule automobile**
Hydraulikflüssigkeitsversorgungsvorrichtung für ein Kraftfahrzeug
Hydraulic fluid supply device for motor vehicle

(30) Priorité: 29.08.2000 FR 0011010
(43) Date de publication de la demande: 06.03.2002
(73) Titulaire: Peugeot Citroën Automobiles, 92200 Neuilly Sur Seine (FR)
(72) Inventeur: Ozanne, Matthieu, 75005 Paris (FR); Briard, Jean-Luc, 95120 Ermont (FR)
(74) Mandataire: De Cuenca, Emmanuel Jaime

(56) Documents cités:
- FR-A- 2 039 474
- FR-A- 2 769 275
- US-A- 2 746 253
- US-A- 4 441 520

## Description

La présente invention concerne un dispositif d'alimentation en fluide hydraulique pour un circuit d'utilisation de fluide destiné à être implanté sur un véhicule automobile, tel qu'un circuit de freinage, ledit dispositif comprenant un premier réservoir doté d'un orifice de remplissage et d'un orifice de distribution et un second réservoir doté d'un orifice d'entrée et débouchant sur le circuit d'utilisation; un unique tuyau flexible dont une des extrémités est connectée à l'orifice de distribution du premier réservoir et l'autre extrémité est connectée à l'orifice d'entrée du second réservoir et au moins un détecteur de niveau adapté pour détecter un défaut d'alimentation en fluide hydraulique du circuit d'utilisation, dans lequel le premier réservoir est ouvert à l'atmosphère et le second réservoir est isolé de l'atmosphère.

Des dispositifs d'alimentation d'alimentation en fluide hydraulique pour véhicules sont usuellement utilisés pour alimenter les circuits de freinage, de commande de l'embrayage, d'assistance à la direction ou de suspension, les circuits de freinage posant cependant des problèmes de sécurité particulièrement importants.

Le document FR 2 039 474 décrit un dispositif dans lequel le second réservoir est un réservoir de secours, permettant une réalimentation du réservoir standard dans le cas où une consommation excessive de fluide viendrait à vider le réservoir standard, et dans lequel l'adjonction d'un réservoir supplémentaire permet d'augmenter l'encombrement au voisinage du maître-cylindre, ce dernier constituant l'élément du circuit d'utilisation de fluide auquel ce fluide est distribué. Ce dispositif n'est absolument pas avantageux sur le plan de la sécurité.Pour rémédier à cet inconvénient, le document FR 2 769 275 a proposé un dispositif d'alimentation en fluide hydraulique pour un circuit d'utilisation de fluide destiné à être implanté sur un véhicule automobile, tel qu'un circuit de freinage, comprenant un premier réservoir doté d'un orifice de remplissage et d'un orifice de distribution et un second réservoir doté d'un orifice d'entrée et débouchant sur le circuit d'utilisation; un unique tuyau flexible dont une des extrémités est connectée à l'orifice de distribution du premier réservoir et l'autre extrémité est connectée à l'orifice d'entrée du second réservoir et au moins un détecteur de niveau adapté pour détecter un défaut d'alimentation en fluide hydraulique du circuit d'utilisation, dans lequel le premier réservoir est ouvert à l'atmosphère et le second réservoir est isolé de l'atmosphère.

Cette solution présente nombre d'avantages. En effet, elle est tout à fait satisfaisante en ce qui concerne la circulation du fluide. En outre, certaines architectures de véhicule automobile prévues sous le capot moteur ne permettent pas d'implanter un réservoir de liquide de frein unique directement sur le maître cylindre. Or, en déportant l'interface de remplissage du réservoir, tel qu'il est préconisé par le document précité, l'accessibilité aux moyens de remplissage en usine de montage est largement facilitée.

Par contre, il s'avère qu'en pratique un tel dispositif est délicat à implanter sur certains véhicules automobile.

Le but de la présente invention est alors de proposer un dispositif du type mentionné ci-dessus qui soit aisé à implanter sur tout type de véhicule automobile.

Un autre but de la présente invention est de préserver la sécurité du freinage même en cas de défaillance à un endroit quelconque du circuit de freinage et notamment en cas de rupture du tuyau (flexible) reliant le premier réservoir au second. Cette solution apporte une solution plus sécuritaire par rapport au document FR2769275.

Pour ce faire, l'invention a pour objet un dispositif conforme à l'objet de la revendication 1.

Avantageusement le rapport en volume entre le deuxième et le premier réservoir est supérieur ou égal à 0,3.

Avantageusement et selon l'invention, le dispositif comporte deux détecteurs de niveau dont l'un, disposé à l'intérieur du premier réservoir, est adapté à détecter le niveau maximal de fluide contenu dans les réservoirs et l'autre,disposé à l'intérieur du second réservoir, est adapté à détecter le niveau minimal de fluide restant dans le deuxième réservoir.

De préférence, le premier réservoir est adapté pour être fixé à l'auvent de la carrosserie du véhicule automobile.

Avec un tel rapport conforme à l'invention, il est possible d'implanter aisément le dispositif d'alimentation sur tous les types de véhicule automobile directement sous le capot moteur et de fixer très facilement le premier réservoir à l'auvent de la carrosserie.

La flexibilité de la conception du dispositif est également grandement améliorée. Il est donc beaucoup plus aisé d'adopter une solution technique à l'environnement du véhicule automobile.

Enfin, il est très aisé de maintenir un volume minimal de liquide de frein sur le maitre cylindre, ce qui est favorable sur le plan de la sécurité en cas de défaillance à un endroit quelconque du circuit.

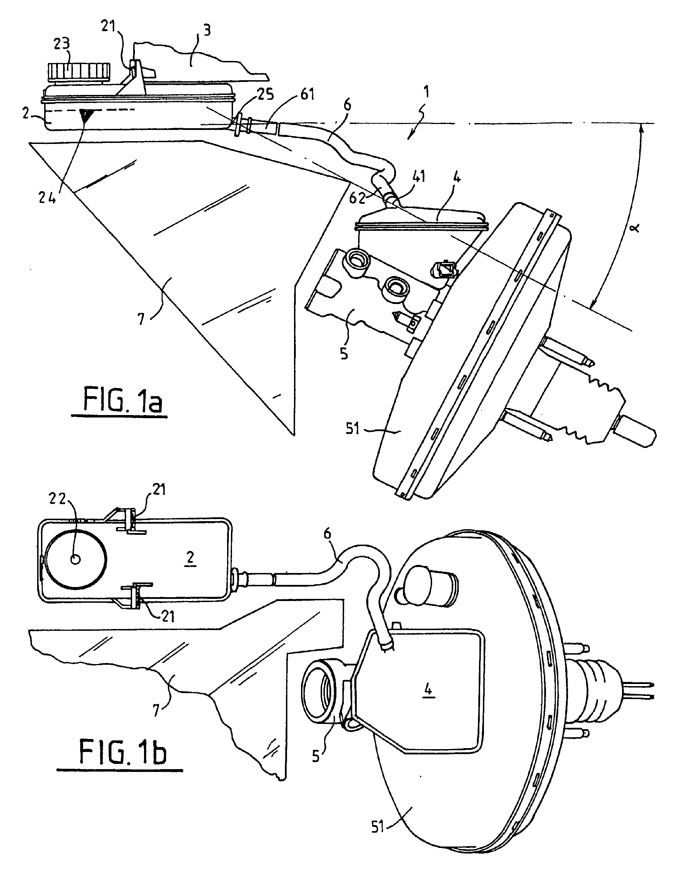

D'autres avantages et caractéristiques avantageuses de l'invention ressortiront ci-après de la description détaillée suivante, faite en référence aux figures 1a et 1b qui représentent respectivement une vue schématique de face et de dessus d'un dispositif conforme à l'invention implanté sur un véhicule automobile.

Le dispositif conforme à l'invention 1 comporte un premier réservoir 2 de liquide de frein de forme parallépipédique plane et d'une contenance de 400 ml. La contenance permet en pratique de compenser la dilatation du liquide de frein lorsque sa température atteint une température critique de l'ordre de 180°C, en particulier lors d'un freinage intensif.

Ce premier réservoir 2 est doté dans sa partie supérieure de deux pattes de fixation 21 percées qui permettent de fixer par l'intermédiaire de deux vis non représentées le réservoir 2 à une partie 3 de la carrosserie d'un véhicule automobile située en dessous du capot moteur, l'auvent 3 dans l'exemple de réalisation dont l'accessibilité est très faible.

Ce premier réservoir 2 communique avec l'atmosphère par l'orifice 22 pratiqué dans le bouchon 23 qui ferme le réservoir 2 de manière étanche. Ce premier réservoir 2 est équipé d'un détecteur de niveau 24 visuel sous la forme d'une flèche qui indique à l'utilisateur le niveau maximal de liquide frein que le dispositif 1 est susceptible de contenir.

Un deuxième réservoir 4 étanche est disposé sur le maître cylindre 5 et dont le piston non représenté est commandé par la pédale de frein actionnée par le conducteur du véhicule. Ce deuxième réservoir 4 a une contenance de 400 ml identique à celle du premier réservoir 2 et a une forme optimisée pour occuper le volume délimité par le maître cylindre 5 et son amplificateur 51. La communication entre les deux réservoirs 2,4 est établie au moyen d'un unique tuyau flexible 6 dont une des extrémités 61 est connectée à un premier embout 25 moulé dans la partie inférieure du premier réservoir 2 et dont l'autre 62 est connectée à un deuxième embout 41 moulé dans la partie supérieure du deuxième réservoir 4. L'implantation de ce deuxième réservoir est telle que le flexible 6 a une pente d'inclinaison α supérieure à 6°,. Cette implantation permet d'optimiser une descente du liquide de frein par gravité quel que soit le volume de liquide restant dans le premier réservoir et les conditions d'utilisation du dispositif 1. En outre, de manière connue en soi, un détecteur de niveau du type à contact simple est situé à l'intérieur du deuxième réservoir 4. Ce détecteur permet de détecter le niveau minimal de fluide contenu dans le dispositif.

Le montage en usine sur véhicule automobile du dispositif 1 qui vient d'être décrit peut être réalisé par tout opérateur et il ne nécessite pas d'utilisation d'outillage spécifique, et ce quelle que soit la géométrie de la structure de la carrosserie sous le capot moteur et l'architecture de celui -ci. En effet, pour réaliser ce montage, l'opérateur procède de la manière suivante : après avoir fixé le deuxième réservoir 4 au maître-cylindre 5, il détend le flexible 5 et vient passer le premier réservoir 2 dans le faible espace délimité par l'auvent et l'environnment moteur puis il fixe par vissage les pattes de fixation 21 à l'auvent 3.

Il va de soi que de nombreuses variantes peuvent être envisagées sans pour autant sortir du cadre de l'invention. Par exemple, il est possible d'avoir les deux réservoirs conformes à l'invention de forme identique.

## Revendications

1. Dispositif d'alimentation en fluide hydraulique (1) pour un circuit d'utilisation de fluide destiné à être implanté sur un véhicule automobile, tel qu'un circuit de freinage, ledit dispositif comprenant un premier réservoir (2) doté d'un orifice de remplissage et d'un orifice de distribution (25) et un second réservoir (4) doté d'un orifice d'entrée (41) et débouchant sur le circuit d'utilisation, un unique tuyau flexible (6) dont une des extrémités (61) est connectée à l'orifice de distribution du premier réservoir (2) et l'autre extrémité (62) est connectée à l'orifice d'entrée du second réservoir (4), et au moins un détecteur de niveau adapté pour détecter un défaut d'alimentation en fluide hydraulique du circuit d'utilisation, dans lequel le premier réservoir (2) est ouvert à l'atmosphère et le second réservoir (4) est isolé de l'atmosphère, **caractérisé en ce que** le rapport en volume entre le deuxième et le premier réservoir est supérieur ou égal à 0,3 ; le volume du second réservoir étant déterminé pour garantir un volume minimal de liquide de frein dans le circuit en cas de défaillance du circuit.

2. Dispositif selon la revendication 1, **caractérisé en ce que** le rapport en volume entre le deuxième et le premier réservoir est égal à 1.

3. Dispositif selon l'une des revendications 1 et 2, **caractérisé en ce que** le premier réservoir (2) est de forme parallépipédique plane.

4. Dispositif selon l'une des revendications 1 à 3, **caractérisé en ce que** les deux réservoirs (2 et 4) ont une forme identique.

5. Dispositif selon l'une des revendications 1 à 4, **caractérisé en ce qu'**il comporte deux détecteurs de niveau dont l'un, disposé à l'intérieur du premier réservoir (2), est adapté à détecter le niveau maximal de fluide contenu dans les réservoirs (2 et 4) et l'autre, disposé à l'intérieur du second réservoir (4), est adapté à détecter le niveau minimal de fluide contenu dans le dispositif.

6. Dispositif selon l'une des revendications 1 à 5, **caractérisé en ce que** le premier réservoir (2) est adapté pour être fixé à l'auvent (3).

## Claims

1. Hydraulic fluid supply device (1) for a fluid usage circuit intended to be installed on a motor vehicle, such as a braking circuit, said device comprising a first reservoir (2) provided with a filler orifice and an outlet orifice (25) and a second reservoir (4) provided with an intake orifice (41) and opening into the usage circuit, a single flexible tube (6) of which one of the ends (61) is connected to the outlet orifice of the first reservoir (2) and the other end (62) is connected to the intake orifice of the second reservoir (4), and at least one level detector able to detect a fault in the hydraulic fluid supply of the usage circuit, wherein the first reservoir (2) is open to the atmosphere and the second reservoir (4) is isolated from the atmosphere, **characterised in that** the ratio in volume between the second and the first reservoir is greater than or equal to 0.3; with the volume of the second reservoir being determined in order to guarantee a minimum volume of brake liquid in the circuit in the event of failure of the circuit.

2. Device according to claim 1, **characterised in that** the ratio in volume between the second and the first reservoir is equal to 1.

3. Device according to one of claims 1 and 2, **characterised in that** the first reservoir (2) has a planar parallelepiped shape.

4. Device according to one of claims 1 to 3, **characterised in that** the two reservoirs (2 and 4) are of identical shape.

5. Device according to one of claims 1 to 4, **characterised in that** it comprises two level detectors of which one, arranged inside the first reservoir (2), is able to detect the maximum level of fluid contained in the reservoirs (2 and 4) and the other, arranged inside the second reservoir (4), is able to detect the minimum level of fluid contained in the device.

6. Device according to one of claims 1 to 5, **characterised in that** the first reservoir (2) is able to be fixed to the roof (3).

## Patentansprüche

1. Vorrichtung zur Hydraulikflüssigkeitsversorgung (1) für einen Flüssigkeitskreislauf, der dazu bestimmt ist, in ein Kraftfahrzeug eingebaut zu werden, wie beispielsweise ein Bremskreis, wobei die besagte Vorrichtung einen ersten Behälter (2) umfasst, der mit einer Einfüllöffnung und einer Verteilungsöffnung (25) versehen ist, sowie einen zweiten Behälter (4), der mit einer Einlauföffnung (41) versehen ist, und in den Nutzkreis mündet, einen einzigen Schlauch (6), dessen erstes Ende (61) mit der Verteilungsöffnung des ersten Behälters (2) verbunden ist, und dessen anderes Ende (62) mit der Einlauföffnung des zweiten Behälters (4) verbunden ist, und zumindest eine Füllstandsonde, die geeignet ist, einen Fehler bei der Versorgung des Nutzkreises mit Hydraulikflüssigkeit zu erfassen, in dem der erste Behälter (2) gegenüber der Atmosphäre offen, und in dem der zweite Behälter (4) von der Atmosphäre isoliert ist, **dadurch gekennzeichnet, dass** das Volumenverhältnis zwischen dem zweiten Behälter und dem ersten Behälter größer oder gleich 0,3 ist; wobei das Volumen des zweiten Behälters so bestimmt ist, dass bei einem Fehler im Kreis ein Mindestvolumen an Bremsflüssigkeit im Kreislauf gewährleistet ist.

2. Vorrichtung nach Anspruch 1, **dadurch gekennzeichnet, dass** das Volumenverhältnis zwischen dem zweiten Behälter und dem ersten Behälter gleich 1 ist.

3. Vorrichtung nach einem der Ansprüche 1 und 2, **dadurch gekennzeichnet, dass** der erste Behälter (2) eine flache Quaderform aufweist.

4. Vorrichtung nach einem der Ansprüche 1 bis 3, **dadurch gekennzeichnet, dass** die beiden Behälter (2 und 4) eine identische Form aufweisen.

5. Vorrichtung nach einem der Ansprüche 1 bis 4, **dadurch gekennzeichnet, dass** sie zwei Füllstandsonden umfasst, von denen eine im Inneren des ersten Behälters (2) angeordnet, und geeignet ist, um den maximalen Füllstand an Flüssigkeit in den Behältern (2 und 4) zu erfassen, und die andere, die im Inneren des zweiten Behälters (4) angeordnet ist, dazu geeignet ist, den Mindestfüllstand an Flüssigkeit in der Vorrichtung zu erfassen.

6. Vorrichtung nach einem der Ansprüche 1 bis 5, **dadurch gekennzeichnet, dass** der erste Behälter (2) geeignet ist, um an der Stützkonsole (3) befestigt zu werden.
